# EUROPEAN PATENT SPECIFICATION

(11) **EP 3 370 587 B1**
(45) Date of publication and mention of the grant of the patent: **08.04.2020**
(21) Application number: 16825882.0
(22) Date of filing: 07.11.2016
(51) Int. Cl.: A47J 36/06, A47J 36/38, A47J 37/10, A47J 37/12

(54) **PERFORATED LID FOR THE COOKING OF FOOD**
PERFORIERTER DECKEL ZUM GAREN VON LEBENSMITTELN
COUVERCLE PERFORÉ POUR LA CUISSON D'ALIMENTS

(30) Priority: 06.11.2015 IT UB201586496 U
(43) Date of publication of application: 12.09.2018
(73) Proprietor: Ferrari, Marco, 04100 Latina (LT) (IT)
(72) Inventor: FERRARI, Marco, 6900 Lugano (CH); FERRARI, Paola, 6900 Lugano (CH)
(74) Representative: Santi, Filippo
(86) International application number: PCT/IB2016/056691
(87) International publication number: WO 2017/077517

(56) References cited:
- EP-A1- 1 745 727
- US-A- 1 149 289
- US-A- 2 428 894

## Description

The present invention relates to a perforated lid for the cooking of food.

Since a few years ago some particular lids are on the market, formed by a body, preferably of metal, of a suitable shape and size to adhere to a container for the cooking of food; said body is provided with a series of holes, generally arranged in a circle, in the vicinity of its center point.

Superiorly, and in correspondence of the holes on said perforated body, an element is placed, the extension of which is greater than the perforated part of the body and the shape of which is suitable to adhere to the upper part of the perforated body; this element, which can be defined deflector, varies its function in relation to the distance from the holes. If the distance from the holes is minimal or zero, then the lid is substantially a traditional lid, and the temperature, inside a container placed on a heat source, rises rapidly; if the distance from the holes increases the temperature inside the container rises more slowly and an exchange of air is created inside the cooking container through the holes while at the same time allowing the outflow of the cooking vapors.

This air/vapor exchange allows to avoid what happens during the cooking with a lid, namely the lack of heat leakage in the gaseous form.

With the traditional lids, once the limit of latent heat of vaporization is reached without the cooking fumes/steam can go out from container, the substances, deprived of their own or added liquids, reach high temperatures arriving shortly to coalification, as it can happen both for distraction and for a miscalculation of the time of cooking.

As mentioned, the lids provided of holes allow to avoid the described drawbacks.

Traditionally, this type of lid allows the cooking of foods at low temperatures, thanks to the series of holes arranged in a circle, which together with the deflector located just below the gripping knob, at a predetermined distance, determines a continuous exchange of air coming from the produced heat and from the natural ethereal entry from the environment.

This peculiarity, very similar to the Venturi effect, generates inside the cooking container, regardless of the size and the type, a series of swirling movements which allow to rapidly cook the foodstuffs, in a short time, and homogeneously.

In early versions of the lids provided with holes, it was not foreseen the possibility to vary the distance between the perforated body and the deflector element placed over the holes and this greatly limited the versatility of the lid. In more recent times, this distance has been made adjustable by means of manual mechanical devices, such as a screw thread on which the deflector device can be moved by rotating it.

According to EP1745727, US2428894 and US1149289 it is disclosed a perforated lid for cooking food, said lid comprising a lid, provided with holes arranged in a circle around the center of the lid; a deflector element, having dimensions smaller than the lid, shaped in the same way of the central part of the lid placed at the upper side of the lid; a threaded pin that connects and makes integral with each other the lid, the deflector element and a knob; wherein between the upper side of the lid and the underside of the deflector element is interposed a device apt to vary the distance between said lid and said deflector element, bringing said deflector element from a position adherent to said lid and such as to cover said holes, to a position spaced from said lid and from said holes, which are consequently free.

This type of means for adjusting the distance between the upper surface of the perforated lid and the flow regulating device, has the drawback of not being convenient to operate, especially it is desired to change the distance between the holes of the cover and the deflector when the lid is was previously placed for some time on a contained placed on fire.

A further drawback of the previous models of perforated lids, is given by the need that the user remember to vary the distance of the deflector element from the holes of the lid to vary the temperature in the cooking container.

It is an object of the present invention a perforated lid for the cooking of foods provided with a deflector element placed in correspondence of the holes and equipped with a device that allows the adjustment of the distance between the deflector element and the outer surface of the lid, in function of the temperature reached by the spacer device placed between the cover and the deflector, so that said spacer allows the deflector element to remain adherent to the outer surface of the perforated lid until reaching a predetermined temperature; to take distance from the surface of the lid when that temperature is exceeded, increasingly moving away while the temperature increases.

It is a second object of the present invention a device which allows, in the presence of a constant temperature to maintain the position reached by the deflector element varying it only when the temperature changes.

The automatic spacer additionally allows the deflector element to reduce its dinstance with the perforated lid with decreasing temperature down to zero the distance when the minimum temperature is reached, leaning on the perforated surface of the lid and practically closing the holes.

In an embodiment, the movement of the deflector element, with respect to the outer surface of the lid, can be obtained by interposing, between the surface of the lid and the deflector element, one or a plurality of extensible supports inside which is placed a spring made of shape memory metal or of shape memory metal alloy.

This particular metal alloy allows a body, for example a spring, to elongate in the presence of heat and return to the initial conformation when the temperature lowers.

Placing a spring made of shape-memory metal alloy, within an extensible support, the spring gradually extends in the presence of heat becoming longer and gradually returns in the initial conformation with the decrease of heat. The extensible support then follow the movement of the spring, by extending or retracting.

The distance taking of the deflector from the lid is carried when it exceeds a certain temperature, which varies depending on the material used to make the spring; for example the distance taking of the deflector away from the cover can take place when in the cooking container the temperature reaches 60 °C.

The extensible support can for example be constituted by a series of rings made in a manner apt to form a telescopic cylinder, inside which is placed the shape memory spring.

Given that the telescopic cylinder is bound on a side to the center of the lid and on the other to the center of the deflector, the excursion of the cylinder, actuated by the shape memory spring, make the deflector take distance from the upper face of the lid and then from the holes, when the heat increases and on the contrary make the deflector come closer to the holes when the heat decreases.

The extensible support, in a different configuration, can be constituted by a cylinder, fixed on a side to the lid, the surface of which is passed from four openings practiced in the direction of length and by a perforated central body in which a pin passes which is preferably threaded and which allows to fix the knob to the lid; around the perforated central body is placed a spring or the like with shape memory; a ring, with a diameter slightly greater than the diameter of the cylinder and provided with four wings facing towards the inside with a size slightly smaller than the openings in the cylinder, is positioned on the cylinder in such a way that the wings slide in the cylinder openings and the displacement of the ring is commanded, in the sliding upwards and/or downwards, by the elongation/retraction of the shape memory spring. The ring is fixed to the center hole of the deflector and therefore every displacement of the ring leads to a displacement of deflector.

It is evident that it is possible to install a plurality of said extensible elements provided with a shape memory spring placed, for example, in the vicinity of the holes of the lid, and with a central element that connects the perforated lid, the deflector element and the knob.

In a different configuration in place of the spring made of shape memory metal alloy a piston with an alloy of gallium inside can be used.

As known, the gallium is a metal that melts expanding at about 30 °C and which returns to the solid state, shrinking, at temperatures below 30 °C. As the temperature increases, therefore, the gallium melts, it elongates the piston and make the deflector take a distance from the lid, while under 30 °C gallium solidifies, the piston retracts and the deflector is lowered overlapping the lid.

In a further configuration, the excursion of the deflector element along the sliding axis can also be obtained by gas loaded pistons, which exploit the thermal expansion of the gases to move the deflector element.

A further configuration may include a contrast spring, such spring is normally extended and is compressed during the extension of the shape memory spring, ensuring a smoother operation of the device, in particular during the return of the deflector element towards the perforated lid.

The shape memory springs may be of the type considered most suitable, not excluding the cup springs.

Such shape memory springs can be preferably made of nickel titanium alloys. It is evident that, wherever it may be considered convenient, it is possible to make the springs with other alloys with shape memory properties, such as for example alloys of copper aluminum and nickel or aluminum and zinc, or iron manganese and silicon.

The invention will hereinafter be described according to descriptive and non-limiting embodiments with reference to the accompanying drawings in which:
- Fig. 1 shows a sectional view of a lid according to a first embodiment of the present invention, with a telescopic cylinder and a deflector in a position far from the holes on the lid;
- Fig. 2 shows a sectional view of the lid of Fig. 1, with the telescopic cylinder and the deflector in a position of "closing" of the holes in the lid;
- Fig. 3 shows a sectional view of the telescopic cylinder of Fig. 1, with a relative shape-memory spring;

- Fig. 4 shows a sectional view of a lid according to a second embodiment of the present invention, with an extensible support and a deflector in a position far from the holes of the lid;
- Fig. 5 shows a sectional view of a lid according to a third embodiment of the present invention, with an extensible support and a deflector in the a position of closing of the holes of the lid;
- Figs. 6,7 and 8 show the details that make up the extensible support of Figures 4 and 5;
- Fig. 9 shows a sectional view of a lid according to a fourth embodiment of the present invention, with a deflector in a position far from the holes and a compressed contrast spring;
- Fig. 10 shows a sectional view of a lid according to a fifth embodiment of the present invention, with a deflector in position near to the holes and a contrast spring in a released position;
- Fig. 11 shows a sectional view in section of a lid which does not form part of the present invention, with a threaded pin for the screwing of an element integral with the deflector element;
- Figs. 12A, 12B and 12C show the lid of Fig. 11, with the deflector element respectively in a position far from the holes, in an intermediate position and in a position close to the holes; and

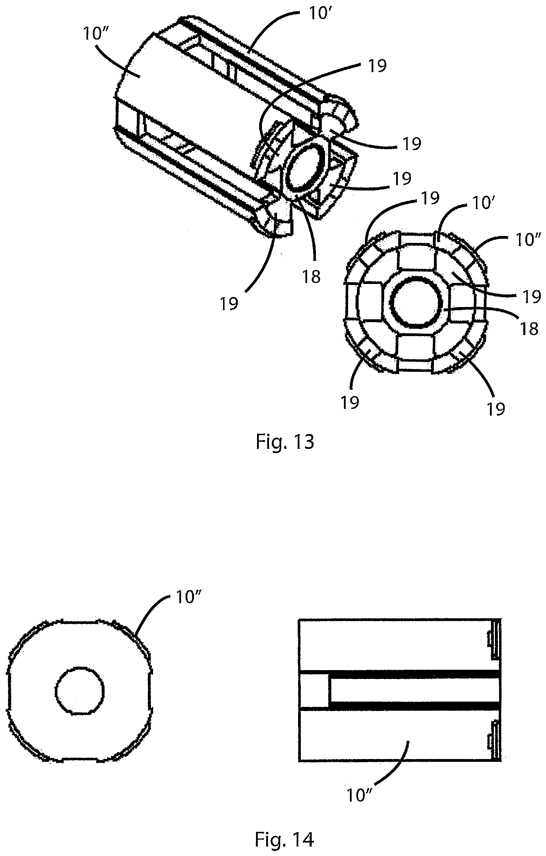

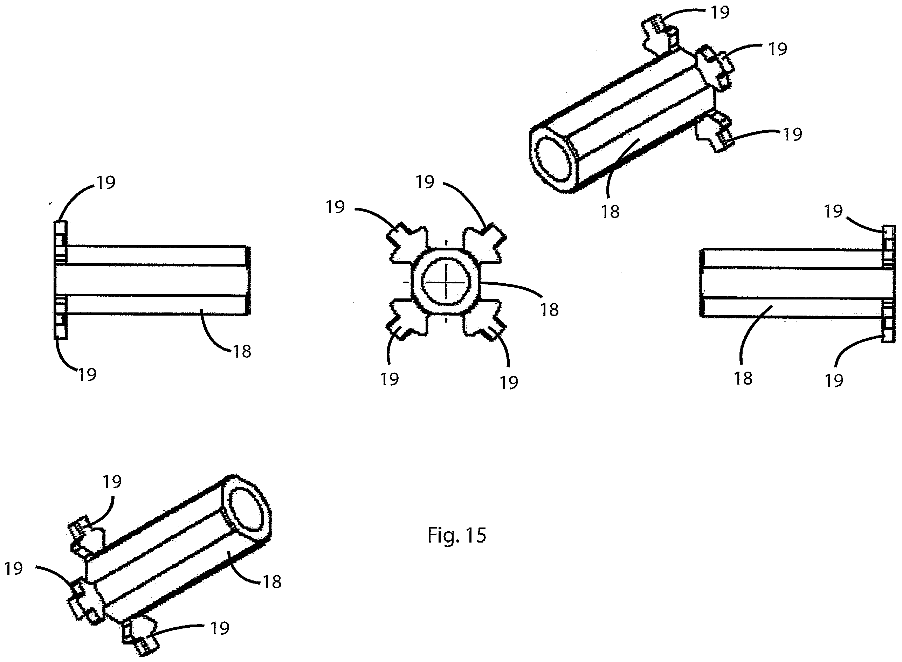

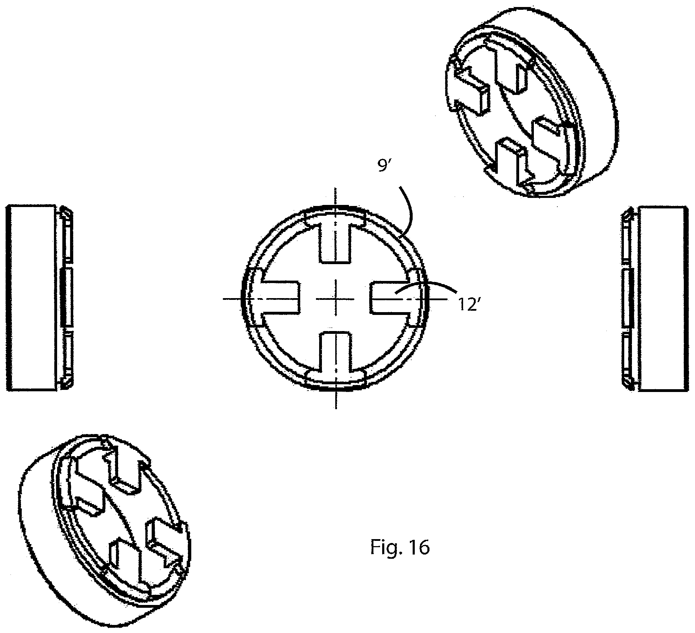

- Figs. 13, 14 and 15 show the details that make up the extensible support of a lid according to a sixth embodiment of the present invention.

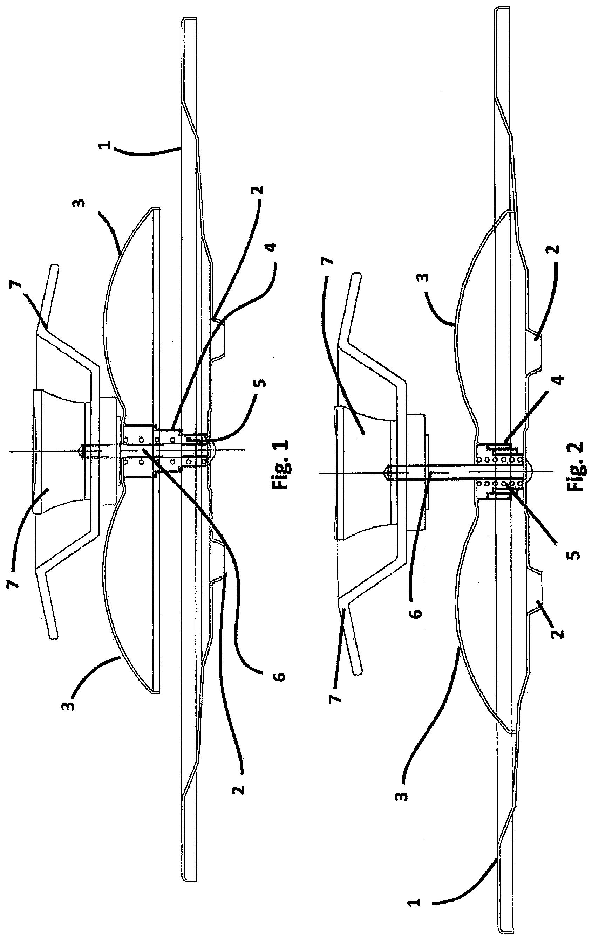

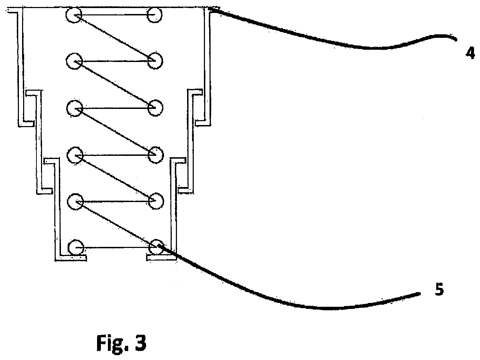

Making preliminarily reference to the Figures 1-3, the lid referred to in this invention, according to a first embodiment, shown by way of example and not of limitation, consists of: a lid 1 provided with a plurality of holes 2 arranged in a circle around the center of the lid 1; a deflector element 3 having a size smaller than the lid 1, shaped with a concave central part and a sloping perimetral part; a telescopic cylinder 4 is interposed between the lid 1 and the deflector element 3, arranged centrally with respect to a vertical pin 6 passing through the center of the lid 1 and the center of the deflector 3; a spring 5 made of shape memory metal or shape memory metal alloys preferably nickel titanium alloys; a knob 7, wherein said vertical pin 6 is at least partially threaded, passing through the center of the lid 1, through the center of the telescopic cylinder 4 and through the center of the deflector element 3, at the top of said vertical pin 6 the knob 7 being screwed.

The telescopic cylinder 4 is made integral with the base of the lid 1 and with the side facing downwards of the deflector element 3, and houses internally, in correspondence to the central vertical axis passing through the center, the threaded pin 6 which is integral with the lid 1, said pin coming out from the top of the telescopic cylinder and the center of the deflector element 3, and acting as a pin on which the knob 7 is screwed.

Inside the telescopic cylinder 4 and around the threaded pin 6 is positioned the spring 5, made of shape memory metal or of shape memory metal alloys, preferably nickel titanium alloys. The spring 5 is, as mentioned, made of a shape memory material which in the presence of heat, that is, when the container on which the lid is arranged is disposed on a heat source, extends consequently elongating the telescopic cylinder 4, which pushes the deflector element 3 upwards, moving it away from the holes 2 of the lid 1. When the heat decreases or ceases, the spring regains the previous form, the cylinder 4 retracts, and the deflector element 3 approaches the holes 2 of the lid 1, avoiding the escape of steam and the inlet of air.

The automatism of approaching and taking distance of the deflector element 3 in function of the amount of heat present in the container ensures that the holes 2 of the lid 1, when the heat is low or zero, for example at the beginning of the cooking, are obstructed by the deflector 3, so that the temperature rise is faster and that, as the temperature increases, the taking distance of the deflector 3 from the lid 1 leave the holes 2 of the lid 1 completely free, causing the exchange of air/steam between the outside and the inside, which allows for well-cooked foods that preserve organoleptic properties.

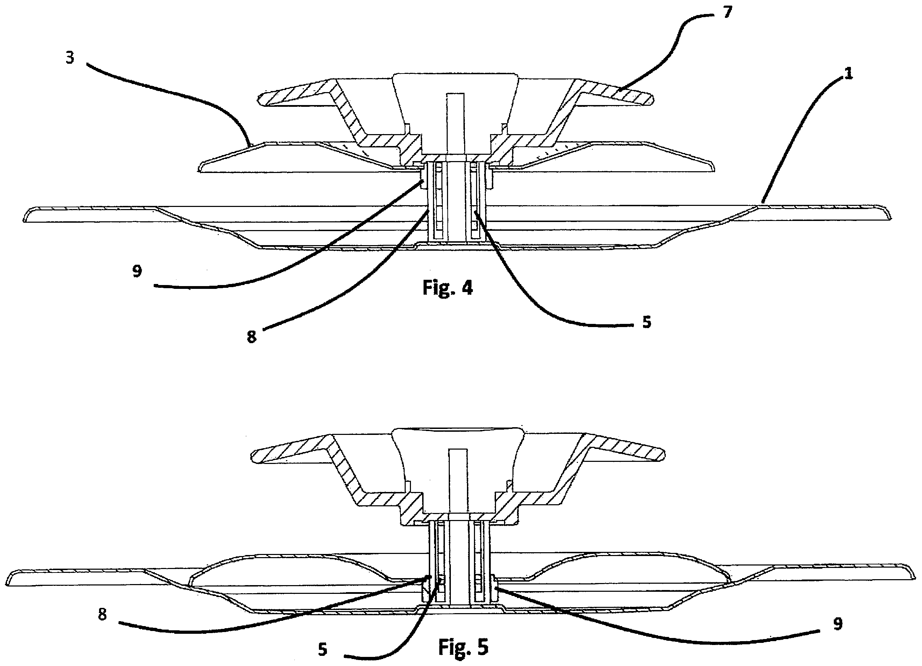

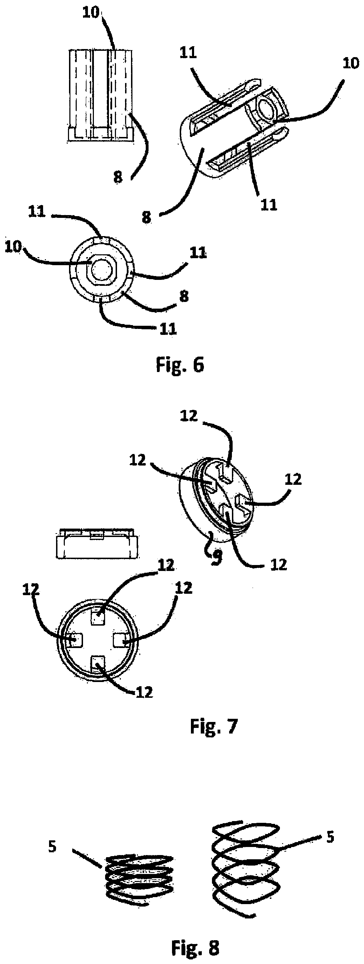

In the solution shown in figures 4 -8, the device for the handling of the deflector element 4 from the position of closing of the holes and vice versa is constituted by a cylinder 8 fixed to the center of the perforated lid by a bushing 9 fixed at the center of the deflector 3; the bushing 9 can slide on the cylinder from the top to the base, the movement of the bushing 9 being generated by a shape memory spring 5, inserted in a coaxial manner around a perforated central body 10, arranged in the cylinder 8. As can be seen from the drawings, the cylinder 8, fixed at one side to the lid, has the surface covered by four openings 11 practiced in the length and has a perforated central body 10 in which a pin passes, preferably a threaded pin, which allows to fix the knob 7 to the lid 1. Around the perforated central body 10 a shape memory spring or similar is placed; the bushing 9, with a diameter slightly greater than the diameter of the cylinder 8, is provided with four wings 12, facing towards the interior, having slightly smaller dimensions than the openings 11 on the cylinder 8; it is positioned on the cylinder 8 in such a way that the wings 12 slide into the openings 11 of the cylinder 8 and the displacement of the bushing 9 is controlled in its sliding upwards and/or downwards by the extension and retraction of the shape memory spring 5 with the changes of the temperature of the container and the lid. As said, the bushing 9 is fixed at the central hole of the deflector element 3, and therefore any displacement of the bushing 9 involves a displacement of the deflector 3.

The coming closer and moving away of the deflector element 3 from the holes 2 of the lid 1, as a function of the temperature present in the the cooking container, can be also obtained with others metals, for example with an element made of gallium, that as is known melts at about 30 °C, changing its state and expanding and then returning to its original state, when the temperature decreases. The element made of gallium, placed within a telescopic cylinder or similar, interposed between the lid 1 and deflector element 3 allows to obtain the same functions of the spring made of shape memory metal alloys.

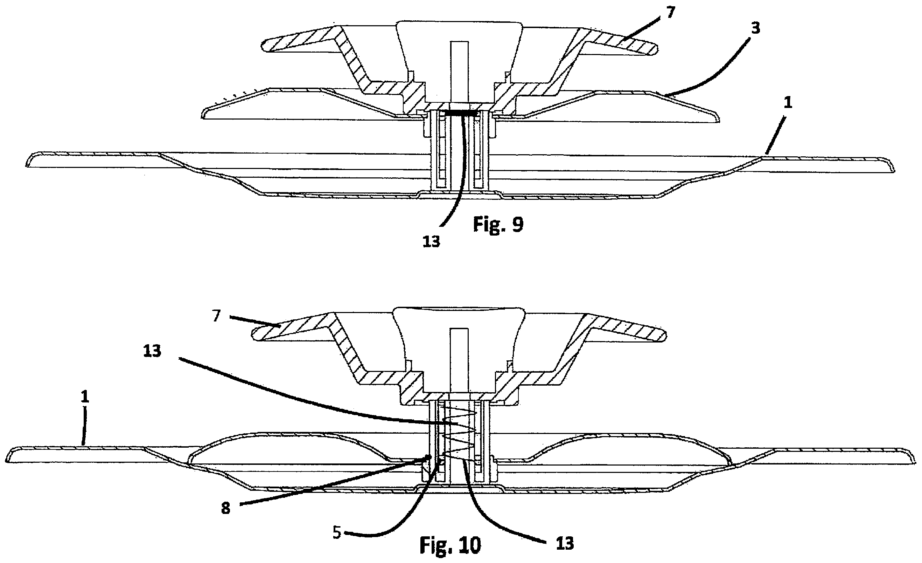

A further variant to the device, which allows the movement upwards or downwards of the deflector element 3 in relation to the heat of the container of cooking/lid 1 is shown with reference to Figs. 9 and 10 and comprises, in addition to the previously described devices, a contrast spring 13, said spring being normally extended and being compressed during the extension of the shape memory spring 5, ensuring a smoother operation of the device, in particular during the return of the deflector 3 to the perforated lid 1.

As previously mentioned, the shape memory springs can be of the type considered more suitable, the cup springs being obviously not excluded.

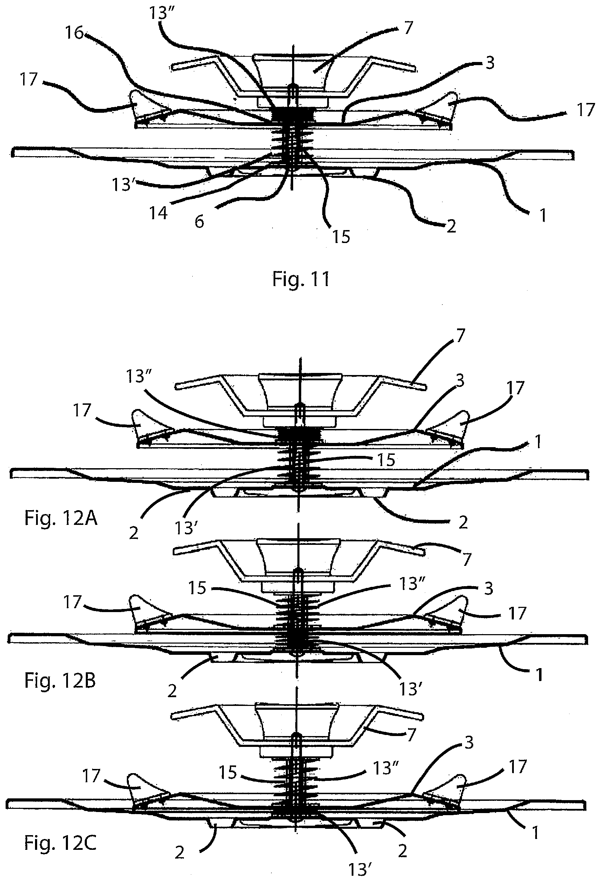

With reference to Figures 11, 12A-12C, a cover that does not form part of the present invention comprises: a lid 1, provided with a plurality of holes 2; the lid 1 being provided with a central hole; a nut 14, integral with the lid 1, to which a hollow threaded pin 15 is screwed; a deflector element 3, provided with a central hole, shaped with a slightly concave central part and a slightly sloping peripheral edge; a knob 7 provided of a dead end and threaded central hole; a threaded nut 16 fixedly connected to the deflector 3 and coaxial to the hole of the same deflector, a threaded pin 6, passing through the hole in the lid 1 and the hollow threaded pin 15 and screwed into the dead end hole of the knob 7; a first compression spring 13', coaxial with the hollow threaded pin 15, disposed between the lid 1 and the deflector element 3; a second compression spring 13", coaxial to the threaded pin 15, disposed between the deflector element 3 and the knob 7; at least a lever 17 to the outer perimeter of the deflector 3, preferably made of heatproof material, or insulating material, and preferably suitably isolated from the deflector element 3.

According to the present invention, the lid 1 is provided with a plurality of holes 2 that in a preferred embodiment have the shape of a cone, slightly elongated and slightly curved, and are placed on the central part the lid, arranged like a spiral around and at a certain distance from the central hole of the lid 1.

In axis with the central hole of the lid 1, screwed to the nut 14, there is a threaded pin 15 and a first spring 13' is positioned coaxially to the threaded pin 15, between the lid 1 and the deflector element 3; a second spring 13", coaxial to the threaded pin 15 is located between the deflector element 3 and the knob 7; the deflector element 3 is screwed through the nut 14 on the threaded pin 15. The threaded pin 6, coaxial to the threaded pin 15, is screwed between the lid 1 and the blind hole of the knob 7.

The nut 16 integral and coaxial to the hole of the deflector element 3, on which the threaded pin engages, allows to move downwards or upwards, along the threaded pin 15, the deflector element 3, by rotating in the direction of screwing or in the opposite direction.

In order to allow the rotation of the deflector element 3 also during the use of the cover, in a preferred embodiment at least one lever 17 is present, preferably insulated from the deflector element 3 and made of anti-heat material. The deflector element 3 can then be approached to the lid, and therefore can be placed closer or moved away from the holes 2 present on the lid 1 and allow to reach and maintain within the container below a higher or lower pressure, and then vary the temperature.

The deflector element 3 is compressed, in each position taken on the threaded pin 15, between the first spring 13' and the second spring 13", and therefore has a high stability. When the deflector element 3 is in the farthest position from the lid 1, the first spring 13' is slightly compressed and the second spring 13" is in the maximum compression position; conversely, when the deflector element 3 is in the position closest to the lid 1, the first spring 13' is in the maximum compression position, while the second spring 13" is slightly compressed.

Coming back to the present invention, the shape of the holes 2, in the form of elongated cone and slightly semicircular, creates a kind of spiral that improves the vortex of vapor/air interchange, exalting the characteristics of the lid.

The movement range of the deflector element 3 with respect to the lid 1 can be such as to bring the deflector element 3 to close the holes.

In a possible variant, the excursion of the deflector element 3 along the sliding axis can also be obtained by different means, such as small devices, such as pistons loaded with gas, which exploit the thermal expansion of the gases to move the deflector element 3 along a vertical sliding axis present between the lid 1 and the gripping knob of the lid.

In another possible variant, the permanence of the deflector element 3 in the position reached with respect to the lid 1 on the threaded pin 15 is not ensured by springs or other contrast media.

In a further possible variant the permanence of the deflector element 3 in the position reached on the pin 15 with respect to the lid 1 is supported by a single spring.

The present invention has been described for illustrative but not limitative purposes, according to its preferred embodiments, but it is to be understood that variations and/or modifications can be made by those skilled in the art without for this departing from the related scope of protection, as defined by the appended claims.

## Claims

1. Perforated lid for cooking food, said lid comprising:
- a lid (1), provided with holes (2) arranged in a circle around the center of the lid (1);
- a deflector element (3), having dimensions smaller than the lid (1), shaped in the same way of the central part of the lid (1) placed at the upper side of the lid (1);
- a threaded pin (6) that connects and makes integral with each other the lid (1), the deflector element (3) and a knob (7);
wherein between the upper side of the lid (1) and the underside of the deflector element (3) is interposed a device apt to vary the distance between said lid (1) and said deflector element (3), bringing said deflector element (3) from a position adherent to said lid (1) and such as to cover said holes (2), to a position spaced from said lid (1) and from said holes (2),which are consequently free, **characterised in that** said device apt to vary the distance between said lid (1) and said deflector element (3) is a device apt to vary its extension as a function of temperature of the cooking container and the lid (1) placed above, said device varying its size extending with increasing temperature and retracting with decreasing of the same.

2. Perforated lid for cooking food according to claim 1, **characterised in that** said device apt to vary its size as a function of the temperature of the cooking container and the lid placed above is constituted by a telescopic cylinder (4), said telescopic cylinder (4) being made integral with the upper face of said lid (1) and with the side facing the lid of said deflector element (3), said telescopic cylinder (4) housing internally, in correspondence of the central vertical axis passing through the center, a threaded pin (6), integral with said lid (1), said threaded pin (6) coming out from the top of said telescopic cylinder (4) and from the center of said deflector element (3), and acting as a pin on which said knob (7) is screwed; internally to said telescopic cylinder (4) and around said threaded pin (6) being positioned a spring (5) made of shape memory metal or shape memory metal alloys; said spring (5) extending with heat causing the elongation of said telescopic cylinder (4), making said deflector element (3) moving away from said lid (1) and, retreating when heat decreases, shortening said telescopic cylinder (4), approaching said deflector (3) to said lid (1).

3. Perforated lid for cooking food according to claim 1, **characterised in that** the device for moving the deflector from a position of closing of holes to that of opening and vice versa is constituted by a cylinder (8) integral to the lid (1) and by a bushing (9), integral with the central hole of the deflector (3), apt to slide on said cylinder (8); the cylinder (8) being provided with a perforated central body (10) and with an outside surface crossed by a plurality of longitudinal openings (11); on said cylinder (8) said bushing (9) being engaged with possibility to slide, said bushing (9) being provided with a plurality of wings (12) directed towards the center, said wings (12) being in number and size such as to enable insertion in the longitudinal openings (11); around the central body (10) shape memory elastic means being positioned, such as for example a spring (5), pushing, during the elongation due to the increase of the heat of the container on which the lid (1) is placed, on the part of the wings (12) which protrudes in the cylinder (8) and moves upwards the deflector (3) integral with the bushing (9).

4. Perforated lid for cooking food according to claim 1, **characterised in that** the device able to vary its extension as a function of the temperature of the cooking container and the lid placed above consists of an extensible element, interposed between the upper side of the lid and the underside of the deflector element (3), said telescopic cylinder (4) contains an element made of gallium able to melt expanding at temperatures above 30 °C and to solidify, by contracting, at a temperature of less than 30 °C, the change of state of the element made of gallium causing the extension of the telescopic cylinder (4) at temperatures above 30 °C and the retraction of the telescopic cylinder at temperatures below 30 °C, with the consequent variations of the position of the deflector element (3) with respect to the perforated lid (1).

5. Perforated lid for cooking food according to claim 1, **characterised in that** the device able to vary its extension as a function of temperature of the cooking vessel and the lid (1) placed above, comprises a contrast spring (13), this spring is normally extended and is compressed during the extension of the shape memory spring (5), ensuring a smoother operation of the device, in particular during the return of the deflector element (3) towards the perforated lid (1).

6. Perforated lid for cooking food according to claim 1, **characterised in that** the device able to vary its extension as a function of temperature of the cooking container and the lid (1) paced above, comprises a cup spring made of shape memory metal or metal alloys.

7. Perforated lid for cooking food according to claim 1, **characterised in that** a plurality of devices are provided capable of varying their extension as a function of the temperature of the cooking container and the lid (1) placed above, said devices being arranged in a suitable position between the upper face of the lid with the holes (1) and the deflector element (3) and a central connecting pin being provided between the lid with the holes (1), the deflecting element (3) and the knob (7).

8. Perforated lid for cooking food according to any one of claims 1, 2, 3, 5, 6, 7, **characterised in that** the spring (5) or the cup spring are made of a shape memory alloy of nickel titanium.

9. Perforated lid for cooking food according to any one of claims 1, 2, 3, 5, 6, 7, **characterised in that** the spring (5) or the cup spring are made of shape memory alloy of copper aluminum and nickel.

10. Perforated lid for cooking food according to any one of claims 1, 2, 3, 5, 6, 7, **characterised in that** the spring (5) or the cup spring are made of shape memory alloy of iron manganese and silicon.

11. Perforated lid for cooking food according to any one of claims 1, 2, 3, 5, 6, 7, **characterised in that** the spring (5) or the cup spring are made of shape memory alloy of copper zinc-aluminum.

## Patentansprüche

1. Perforierter Deckel zum Kochen von Speisen, wobei der Deckel umfasst:
- einen Deckel (1), der mit Löchern (2) versehen ist, die in einem Kreis um die Mitte des Deckels (1) angeordnet sind;
- ein Deflektorelement (3) mit Abmessungen, die kleiner als der Deckel (1) sind, geformt auf die gleiche Weise wie der mittlere Teil des Deckels (1), der an der Oberseite des Deckels (1) angeordnet ist;
- einen Gewindestift (6), der den Deckel (1), das Deflektorelement (3) und einen Knopf (7) miteinander verbindet und integral macht;
wobei zwischen der Oberseite des Deckels (1) und der Unterseite des Deflektorelements (3) eine Einrichtung eingefügt ist, die geeignet ist, den Abstand zwischen dem Deckel (1) und dem Deflektorelement (3) zu variieren, wobei das Deflektorelement (3) aus einer an dem Deckel (1) anliegenden Position, in der die Löcher (2) bedeckt sind, in eine Position gebracht wird, in der es von dem Deckel (1) und den Löchern (2) beabstandet ist, die folglich frei sind, **dadurch gekennzeichnet, dass** die Einrichtung, die geeignet ist, den Abstand zwischen dem Deckel (1) und dem Deflektorelement (3) zu verändern, eine Einrichtung ist, die geeignet ist, ihre Ausdehnung als Funktion der Temperatur des Kochbehälters und des darüber angeordneten Deckels (1) zu verändern, wobei die Einrichtung ihre Größe variiert, indem sie sich mit zunehmender Temperatur ausdehnt und mit abnehmender Temperatur zusammenzieht.

2. Perforierter Deckel zum Kochen von Speisen nach Anspruch 1, **dadurch gekennzeichnet, dass** die Einrichtung, die geeignet ist, ihre Größe als Funktion der Temperatur des Kochbehälters und des darüber angeordneten Deckels zu verändern durch einen Teleskopzylinder (4) gebildet ist, wobei der Teleskopzylinder (4) integral mit der Oberseite des Deckels (1) und mit der dem Deckel des Deflektorelements (3) zugewandten Seite ausgebildet ist, wobei der Teleskopzylinder (4) im Inneren in Übereinstimmung mit der durch die Mitte verlaufenden zentralen vertikalen Achse einen Gewindestift (6) untergebracht hat, der integral mit dem Deckel (1) ausgebildet ist, wobei der Gewindestift (6) von der Oberseite des Teleskopzylinders (4) und von der Mitte des Deflektorelements (3) ausgeht und als Stift wirkt, an dem der Knopf (7) angeschraubt ist; wobei im Inneren des Teleskopzylinders (4) und um den Gewindestift (6) herum eine aus Formgedächtnismetall oder Formgedächtnismetalllegierungen gefertigte Feder (5) angeordnet ist; wobei sich die Feder (5) mit Wärme ausdehnt und die Dehnung des Teleskopzylinders (4) bewirkt, wodurch sich das Deflektorelement (3) von dem Deckel (1) weg bewegt, und sich zusammenzieht, wenn die Wärme abnimmt, wodurch sich der Teleskopzylinder (4) verkürzt und sich der Deflektor (3) dem Deckel (1) nähert.

3. Perforierter Deckel zum Kochen von Speisen nach Anspruch 1, **dadurch gekennzeichnet, dass** die Einrichtung zum Bewegen des Deflektors von einer Position zum Schließen von Löchern zu der zum Öffnen und umgekehrt durch einen Zylinder (8), der integral mit dem Deckel (1) ausgebildet ist, und eine Buchse (9) ausgebildet ist, die integral mit dem zentralen Loch des Deflektors (3) ausgebildet ist und dazu geeignet ist, auf dem Zylinder (8) zu gleiten; wobei der Zylinder (8) mit einem perforierten Zentralkörper (10) und mit einer Außenfläche versehen ist, die von einer Vielzahl von Längsöffnungen (11) gekreuzt wird; wobei sich auf dem Zylinder (8) die Buchse (9) in Eingriff mit einer Gleitmöglichkeit befindet, wobei die Buchse (9) mit einer Vielzahl von Flügeln (12) versehen ist, die zur Mitte gerichtet sind, wobei die Flügel (12) in Anzahl und Größe so sind, dass sie ein Einsetzen in die Längsöffnungen (11) ermöglichen; wobei um den Zentralkörper (10) herum elastische Formgedächtnismittel angeordnet sind, wie beispielsweise eine Feder (5), die während der Ausdehnung aufgrund der Zunahme der Wärme des Behälters, auf den der Deckel (1) aufgesetzt ist, auf den Teil der Flügel (12) drückt, der in den Zylinder (8) hineinragt und den mit der Buchse (9) integral ausgebildeten Deflektor (3) nach oben bewegt.

4. Perforierter Deckel zum Kochen von Speisen nach Anspruch 1, **dadurch gekennzeichnet, dass** die Einrichtung, die ihre Ausdehnung als Funktion von der Temperatur des Kochbehälters und des darüber angeordnete Deckels ändern kann, aus einem ausdehnbaren Element besteht, das zwischen der Oberseite des Deckels und der Unterseite des Deflektorelements (3) eingefügt ist, wobei der Teleskopzylinder (4) ein Element aus Gallium enthält, das in der Lage ist zu schmelzen, wobei es sich bei Temperaturen über 30 °C ausdehnt, und sich zu verfestigen, durch Zusammenziehen bei einer Temperatur von weniger als 30 °C, wobei die Zustandsänderung des Elements aus Gallium die Ausdehnung des Teleskopzylinders (4) bei Temperaturen oberhalb von 30 °C und das Zusammenziehen des Teleskopzylinders bei Temperaturen unterhalb von 30 °C, mit den sich daraus ergebenden Änderungen der Position des Deflektorelements (3) in Bezug auf den perforierten Deckel (1) bewirkt.

5. Perforierter Deckel zum Kochen von Speisen nach Anspruch 1, **dadurch gekennzeichnet, dass** die Einrichtung, die ihre Ausdehnung als Funktion von der Temperatur des Kochgefäßes und des darüber angeordnete Deckels (1) ändern kann, eine Kontrastfeder (13) umfasst, wobei diese Feder normalerweise ausgedehnt ist und während der Ausdehnung der Formgedächtnisfeder (5) zusammengedrückt wird, was einen ruhigeren Betrieb der Einrichtung gewährleistet, insbesondere während des Zurückkehrens des Deflektorelements (3) in Richtung des perforierten Deckels (1).

6. Perforierter Deckel zum Kochen von Speisen nach Anspruch 1, **dadurch gekennzeichnet, dass** die Einrichtung, die ihre Ausdehnung als Funktion von der Temperatur des Kochbehälters und des darüber angeordnete Deckels (1) ändern kann, eine Tellerfeder aus Formgedächtnismetall oder Metalllegierungen umfasst.

7. Perforierter Deckel zum Kochen von Speisen nach Anspruch 1, **dadurch gekennzeichnet, dass** mehrere Einrichtungen bereitgestellt werden, die ihre Ausdehnung als Funktion der Temperatur des Kochbehälters und des darüber angeordneten Deckels (1) variieren können, wobei die Einrichtungen in einer geeigneten Position zwischen der Oberseite des Deckels mit den Löchern (1) und dem Deflektorelement (3) angeordnet sind, und ein zentraler Verbindungsstift zwischen dem Deckel mit den Löchern (1), dem Deflektorelement (3) und dem Knopf (7) bereitgestellt ist.

8. Perforierter Deckel zum Kochen von Speisen nach einem der Ansprüche 1, 2, 3, 5, 6, 7, **dadurch gekennzeichnet, dass** die Feder (5) oder die Tellerfeder aus einer Formgedächtnislegierung von Nickeltitan gefertigt ist.

9. Perforierter Deckel zum Kochen von Speisen nach einem der Ansprüche 1, 2, 3, 5, 6, 7, **dadurch gekennzeichnet, dass** die Feder (5) oder die Tellerfeder aus einer Formgedächtnislegierung von Kupferaluminium und Nickel gefertigt ist.

10. Perforierter Deckel zum Kochen von Speisen nach einem der Ansprüche 1, 2, 3, 5, 6, 7, **dadurch gekennzeichnet, dass** die Feder (5) oder die Tellerfeder aus einer Formgedächtnislegierung von Eisenmangan und Silicium gefertigt ist.

11. Perforierter Deckel zum Kochen von Speisen nach einem der Ansprüche 1, 2, 3, 5, 6, 7, **dadurch gekennzeichnet, dass** die Feder (5) oder die Tellerfeder aus einer Formgedächtnislegierung von Kupfer-Zink-Aluminium gefertigt ist.

## Revendications

1. Couvercle perforé pour la cuisson d'aliments, ledit couvercle comprenant :
- un couvercle (1) pourvu de trous (2) agencés en cercle autour du centre du couvercle (1) ;
- un élément déflecteur (3) ayant des dimensions inférieures à celles du couvercle (1), conformé de la même manière que la partie centrale du couvercle (1) placée sur le côté supérieur du couvercle (1) ;
- une broche filetée (6) qui raccorde et intègre l'un à l'autre le couvercle (1), l'élément déflecteur (3) et un bouton (7) ;
dans lequel est intercalé entre le côté supérieur du couvercle (1) et la partie inférieure de l'élément déflecteur (3) un dispositif qui est à même de modifier la distance entre ledit couvercle (1) et ledit élément déflecteur (3), d'amener ledit élément déflecteur (3) d'une position adhérant audit couvercle (1) et de manière à recouvrir lesdits trous (2) à une position espacée dudit couvercle (1) et desdits trous (2), qui sont en conséquence libres, **caractérisé en ce que** ledit dispositif qui est à même de modifier la distance entre ledit couvercle (1) et ledit élément déflecteur (3) est un dispositif qui est à même de modifier son extension en fonction de la température du récipient de cuisson et du couvercle (1) placé au-dessus de celui-ci, ledit dispositif modifiant sa taille qui s'étend lorsque le température augmente et se rétracte lorsque celle-ci diminue.

2. Couvercle perforé pour la cuisson d'aliments selon la revendication 1, **caractérisé en ce que** ledit dispositif qui est à même de modifier sa taille en fonction de la température du récipient de cuisson et du couvercle placé au-dessus de celui-ci est constitué d'un cylindre télescopique (4), ledit cylindre télescopique (4) étant intégré à la face supérieure dudit couvercle (1) et au côté en regard du couvercle dudit élément déflecteur (3), ledit cylindre télescopique (4) recevant intérieurement, en correspondance avec l'axe vertical central passant par le centre, une broche filetée (6) d'un seul tenant avec ledit couvercle (1), ladite broche filetée (6) sortant de la partie supérieure dudit cylindre télescopique (4) et du centre dudit élément déflecteur (3) et agissant comme une broche sur laquelle ledit bouton (7) est vissé ; et, à l'intérieur dudit cylindre télescopique (4) et autour de ladite broche filetée (6) est disposé un ressort (5) constitué d'un métal à mémoire de forme ou d'alliages métalliques à mémoire de forme ; ledit ressort (5) s'étendant sous l'effet de la chaleur, ce qui amène l'allongement dudit cylindre télescopique (4), le déplacement dudit élément déflecteur (3) qui s'écarte dudit couvercle (1), le retrait lorsque la chaleur diminue, le raccourcissement dudit cylindre télescopique (4) et le rapprochement dudit déflecteur (3) dudit couvercle (1).

3. Couvercle perforé pour la cuisson d'aliments selon la revendication 1, **caractérisé en ce que** le dispositif de déplacement du déflecteur d'une position de fermeture de trous à celle de leur ouverture et vice versa est constitué par un cylindre (8) d'un seul tenant avec le couvercle (1) et par une douille (9) d'un seul tenant avec le trou central du déflecteur (3) et qui est à même de coulisser sur ledit cylindre (8) ; le cylindre (8) étant pourvu d'un corps central perforé (10) et d'une surface externe traversée par une pluralité d'ouvertures longitudinales (11) ; ladite douille (9) étant engagée sur ledit cylindre (8) avec la possibilité de coulisser, ladite douille (9) étant pourvue d'une pluralité d'ailes (12) dirigées vers le centre, lesdites ailes (12) étant en nombre et en taille tels que cela permette leur insertion dans les ouvertures longitudinales (11) ; des moyens élastiques à mémoire de forme, par exemple un ressort (5), étant positionnés autour du corps central (10) et pressant, au cours de l'allongement dû à l'augmentation de la chaleur du récipient sur lequel le couvercle (1) est placé, sur la partie des ailes (12) qui fait saillie dans le cylindre (8) et déplace vers le haut le déflecteur (3) d'un seul tenant avec la douille (9).

4. Couvercle perforé pour la cuisson d'aliments selon la revendication 1, **caractérisé en ce que** le dispositif qui est à même de modifier son extension en fonction de la température du récipient de cuisson et du couvercle placé au-dessus de celui-ci est constitué d'un élément extensible intercalé entre le côté supérieur du couvercle et la partie inférieure de l'élément déflecteur (3), ledit cylindre télescopique (4) contient un élément constitué de gallium qui est à même de fondre par expansion à des températures supérieures à 30 °C et de se solidifier par contraction à une température inférieure à 30 °C, le changement d'état de l'élément constitué de gallium entraînant l'extension du cylindre télescopique (4) à des températures supérieures à 30 °C et la rétraction du cylindre télescopique à des températures inférieures à 30 °C, avec les variations consécutives de la position de l'élément déflecteur (3) par rapport au couvercle perforé (1).

5. Couvercle perforé pour la cuisson d'aliments selon la revendication 1, **caractérisé en ce que** le dispositif qui est à même de modifier son extension en fonction de la température du récipient de cuisson et du couvercle (1) placé au-dessus de celui-ci comprend un ressort de contraste (13), ce ressort est normalement étendu et comprimé au cours de l'extension du ressort à mémoire de forme (5), ce qui garantit un fonctionnement plus uniforme du dispositif, en particulier au cours du retour de l'élément déflecteur (3) vers le couvercle perforé (1).

6. Couvercle perforé pour la cuisson d'aliments selon la revendication 1, **caractérisé en ce que** le dispositif qui est à même de modifier son extension en fonction de la température du récipient de cuisson et du couvercle (1) placé au-dessus de celui-ci comprend un ressort Belleville constitué d'un métal ou d'alliages métalliques à mémoire de forme.

7. Couvercle perforé pour la cuisson d'aliments selon la revendication 1, **caractérisé en ce qu'**il est prévu une pluralité de dispositifs capables de modifier leur extension en fonction de la température du récipient de cuisson et du couvercle (1) placé au-dessus de celui-ci, lesdits dispositifs étant agencés dans une position appropriée entre la face supérieure du couvercle avec les trous (1) et l'élément déflecteur (3) et une broche de liaison centrale qui est disposée entre le couvercle avec les trous (1), l'élément déflecteur (3) et le bouton (7).

8. Couvercle perforé pour la cuisson d'aliments selon l'une quelconque des revendications 1, 2, 3, 5, 6, 7, **caractérisé en ce que** le ressort (5) ou le ressort Belleville est constitué d'un alliage à mémoire de forme de nickel et de titane.

9. Couvercle perforé pour la cuisson d'aliments selon l'une quelconque des revendications 1, 2, 3, 5, 6, 7, **caractérisé en ce que** le ressort (5) ou le ressort Belleville est constitué d'un alliage à mémoire de forme de cuivre, d'aluminium et de nickel.

10. Couvercle perforé pour la cuisson d'aliments selon l'une quelconque des revendications 1, 2, 3, 5, 6, 7, **caractérisé en ce que** le ressort (5) ou le ressort Belleville est constitué d'un alliage à mémoire de forme de fer, de manganèse et de silicium.

11. Couvercle perforé pour la cuisson d'aliments selon l'une quelconque des revendications 1, 2, 3, 5, 6, 7, **caractérisé en ce que** le ressort (5) ou le ressort Belleville est constitué d'un alliage à mémoire de forme de cuivre et de zinc-aluminium.
